# EUROPEAN PATENT APPLICATION

(11) **EP 1 720 042 A1**
(43) Date of publication of application: **08.11.2006**
(21) Application number: 05703449.8
(22) Date of filing: 12.01.2005
(51) Int. Cl.: G01T 1/20, G01T 1/202, C09K 11/00, C09K 11/61

(54) **RADIATION DETECTOR ASSEMBLY**

(30) Priority: 19.01.2004 JP 2004010449
(71) Applicant: Japan Science and Technology Agency, Kawaguchi-shi, Saitama 332-0012 (JP)
(72) Inventor: MURAKAMI, Hidetoshi, 2710044 (JP); SHIBUYA, Kengo, 1830045 (JP); SAITO, Haruo, 1400002 (JP); ASAI, Keisuke, Sendai-shi, Miyagi 9800861 (JP); HONDA, Tsuneo, 2720804 (JP)
(74) Representative: Wilson Gunn
(86) International application number: PCT/JP2005/000210
(87) International publication number: WO 2005/069039

(57) **Abstract**

To present a scintillation crystal containing a fluorescent component with excellent luminous efficiency and short decay time while the wavelength of the emitted light being in the visible light region or very near the visible light region and a radiation detection device using the scintillation crystal having an excellent timing resolution capability.

Barium chloride (BaCl₂) is used as the scintillation crystal. A radiation detection device comprising a barium chloride (BaCl₂) crystal as a scintillator and a photomultiplier tube to receive the light from the scintillator wherein the wavelength of the light emitted from the scintillator is between 250 nm and 350 nm and the scintillator is located in a low humidity atmosphere.

## Description

### TECHNICAL FIELD

The present invention relates to a detection device for radiation, particularly gamma rays, and more specifically to a gamma ray detection device with extremely fast timing resolution capability.

### PRIOR ART

Conventional gamma ray detectors do not necessarily provide adequate timing resolution capabilities, particularly for measuring positron annihilation lifetimes (PALs) of position annihilation gamma rays (0.511 MeV). The timing resolution capability is very important in actual applications. For example, if the timing resolution capability of PET (positron emission tomography) is improved, the detection accuracy for positron locations obtained from time data in the delivery of medical treatments improves. As a result, the measurement time is shortened and the radiation source intensity is reduced resulting in a reduction of the burden on test subjects. In addition, since the positron annihilation lifetime measurements are utilized in the detection of lattice defects in materials science, the improvement in timing resolution capability improves the detection sensitivity.

In order to improve the timing resolution capability of such gamma ray detectors, a scintillation crystal with a fluorescent component having a shorter decay time than before is essential. However, many of the scintillation crystals, which are actually used, are just crystals with high luminescent quantum yields but slow fluorescence decay constants on the order of several hundred nano seconds (ex. NaI (TI), CsI(TI), ScI(TI), CsI (Na), BGO, CdWO₄ and the like) or crystals with fast decay time constants in the order of several nano seconds to 30 nano seconds but low luminescent quantum yields (ex. CsF, CeF₃, CsI, organic scintillators and the like).

Of the scintillators that are practical to use, barium fluoride (BaF₂) is the only one with a sub-nanosecond decay time constant (600 pico seconds) (see non-patent reference 1). However, the wavelength of the fast fluorescent component is extremely short, 225 nm, making it very difficult to handle. For example, expensive detectors used with ultraviolet radiation must be used.

The BaCl₂ fluorescence life after X ray irradiation has been measured (see non-patent reference 2). Since a material that emits light at high speed and at a high light emission rate is being sought in the radiation measuring field and this material is deliquescent, making its use difficult, almost no studies have been conducted on BaCl₂ as a scintillator material.

The inventors, in order to discover an ideal scintillator, have continued to conduct research to find a material with high fluorescence intensity and a fast decay time constant that also emits light in the visible light region making it usable in inexpensive detectors. (Non-patent reference 3, patent reference 1 and Japanese Patent Application No. 2003-106277).
Patent Reference 1: Unexamined Japanese Patent Application No. 2003-215251
Non-patent Reference 1: M. Laval et al., Nuclear Instrumentation Method, 206 (1983) 169
Non-patent Reference 2: S.E. Derenzo et al., IEEE Nuclear Science Symposium Conference Record 91CH3100-5, Vol. 1, pp. 143-147, 1991
Non-patent Reference 3: H. Saito et al., Nuclear Instruments and Methods in Physics Research A487 (2002) 612-617.

### PROBLEMS TO BE SOLVED BY THE INVENTION

The objective of the present invention is to present a scintillation crystal containing a fluorescent component with high light emission efficiency and a short decay time having an emitted light wavelength in the visible light region or very close proximity thereto and a radiation detection device thereof with excellent timing resolution capability.

### MEANS TO SOLVE THE PROBLEMS

Barium chloride (BaCl₂) is used as the scintillation crystal. That is, the present invention is a radiation detection device comprising a barium chloride (BaCl₂) crystal as a scintillator and a photomultiplier tube to receive the light from the scintillator wherein the wavelength of the light emitted from the scintillator is between 250 nm and 350 nm and the scintillator is located in a low humidity atmosphere. It is preferred that the barium chloride crystal as a scintillator is cooled.

### BRIEF DESCRIPTION OF THE DRAWINGS

Figure 1 shows the positions of the measuring devices used in the examples.
Figure 2 shows the measurement results from Example 1. The abscissa represents the channel number (time), and the ordinate represents the count number.
Figure 3 shows a comparison of the rise time [response rate?] for the measured wave shape for the BaCl₂ and BaF₂ scintillators.
Figure 4 shows the cooling mode for the measurements using a BaCl₂ scintillator. A copper block is cooled using liquid nitrogen, but a heater is controlled by the temperature sensor attached in the vicinity of the crystal to maintain a designated temperature.
Figure 5 shows the measurement results from Example 3.
Figure 6 shows the measurement results from Comparative Example 1.

### DETAILED DESCRIPTION OF THE INVENTION

A vertical Bridgeman method that can form large single crystals is appropriate as a method to manufacture the scintillation crystals of the present invention. In this method, a tall melting pot containing the raw material for crystals is slowly lowered into a vertical furnace (crystal growth furnace) with a designated temperature gradient, and the molten liquid inside the melting pot is allowed to solidify from the bottom to obtain crystals.

Barium chloride (BaCl₂) is readily soluble in water (36 g/100 g H₂O 20°C), has a melting point of 962°C, is a monoclinic system and forms cubic crystals through a phase transition at 923°C. It is ordinarily known in the form of a dihydrate but forms an anhydrous material at 121°C. Therefore, crystals with as little moisture as possible are preferred.

Since barium chloride (BaCl₂) crystals are deliquescent, this scintillator needs to be located in a low humidity atmosphere. In order to create a low humidity atmosphere, the crystal may, for example, be placed in a sealed environment and maintained under vacuum or the sealed environment may be filled with an inert gas such as nitrogen, rare gasses and the like, or an inert gas may be allowed to flow through the environment. In addition, a desiccant may be simply placed in the vicinity when a measurement takes a short time.

Barium chloride (BaCl₂) crystals radiate light in the vicinity of a wavelength of 300 nm, that is, from 250 nm to 350 nm when exposed to radiation, particularly gamma rays. A photomultiplier tube is used to detect this radiated light.

A photomultiplier tube is composed of a photoelectron surface that converts light into electrons and an amplifying section that amplifies the electron beam. A photomultiplier tube containing an MCP (microchannel plate) may be used. An MCP is an element constructed from a glass plate having minute holes (channels). When a voltage (several kilovolts) is applied to both surfaces, the incident electrons from the negative potential side collides with the channel wall and amplification occurs due to the secondary electrons generated. A photomultiplier tube containing an MCP can detect a single photon by employing such an element and is a photoelectronic multiplier tube with a high speed response time. This type of photomultiplier tube containing MCP is commercially available, for example, from Hamamatsu Photonics K.K. in R3809 series and R5916 series models.

The photoemission rate from BaCl₂ increases with cooling. Therefore, the timing resolution capability can potentially improve further when the crystals are cooled.

The high speed photoemission component of BaCl₂ appears in the vicinity of 300 nm wavelength. In a BaF₂ scintillator, the fast photoemission component wavelength is extremely short, 225 nm, and expensive UV glass or synthetic quartz must be used in the window of the photomultiplier tube. However, when the wavelength involved is 300 nm, more common borosilicate glass may be the material used. In addition, the availability of a photoelectronic surface material with high sensitivity in the area of 225 nm is limited, but bialkali photomultiplier tubes with high sensitivity and low dark current that are frequently used in near ultraviolet-visible regions may be used at 300 nm. Therefore, photomultiplier tubes that can be used for BaCl₂ are more readily available than for BaF₂. In addition, BaCl₂ has a sufficiently short decay time constant even though it is not as short as that of BaF₂, and a radiation detection device with excellent timing resolution capability can potentially be built using it.

The radiation detection device of the present invention may also contain, in addition to the barium chloride crystal and the photomultiplier tube described above, other suitable radiation detection equipment connected to these parts. For example, a digital oscilloscope may be combined with a barium chloride crystal and a photomultiplier tube containing an MCP or the device may be constructed so that a digital oscilloscope is activated by an external trigger circuit. Furthermore, commonly used equipment may be used to shape the detected waveform.

A constant fraction discriminator (CFD), a time-amplitude conversion circuit (TAC) and a multi-channel analyzer (MCA) have been used in conventional radiation time measurements using a coincidence method. However, the devices described above are replaced in the present invention. That is, the waveform released from a photomultiplier tube are stored and converted into numbers by a high speed digital oscilloscope, and a time differential analysis is conducted upon transferring the information to a personal computer. This is the method developed by the inventors (Non-patent Reference 1). By using this method, measurements with extremely high timing resolution capability are made possible.

A positron decay gamma ray is preferred as the measurement target of this radiation detection device. C-11, N-13, O-15 and F-18 may be cited as the radiation source used in PET, and Na-22, Ge-68 and the like may be cited as the radiation source used in the measurements of positron life.

The present invention is illustrated in the examples, but these examples are not intended to limit the scope of the present invention.

### Production Example 1

A barium chloride (BaCl₂) crystal was prepared according to the procedure below.

850 g of BaCl₂ (manufactured by Aldrich, 99.999% purity, component ratio for Ba:Cl = 1:2. crystal structure cubic system, specific gravity 3.096, index of refraction 1.646) was placed in a carbon melting pot with a 60 mm internal diameter and was set in a furnace. A rotary pump and an oil diffusion pump were used to evacuate the furnace (degree of vacuum: ~10-5Pa). The furnace was heated using a heater, and the contents were dried at a low temperature (120°C for 24 hours).

This furnace was heated to 970°C according to a temperature raising program and was maintained for 24 hours. The melting pot was lowered 105 mm at a rate of 0.3 mm/h (about 350 hours). The furnace was allowed to cool to room temperature (96 hours), after which the material was removed and was then molded and polished.

The BaCl₂ crystal obtained in the manner described above was applied directly to the light receiving surface of a photomultiplier tube (Hamamatsu Photonics H3378) using silicone grease to prepare a radiation detection device. An aluminum reflection sheet was used to cover the BaCl₂ to efficiently direct the emitted light to a photomultiplier tube. In addition, measurements required a short time, and a desiccant was placed near the BaCl₂.

Simultaneously, a similar radiation detection device for comparison was prepared using barium fluoride (Ohyoh Koken Kogyo K.K.) as the scintillator crystal.

The BaCl₂ used as the scintillator crystal was a cubic material, 10 mm square, and the BaF₂ was in the form of a cylinder 30 mm in diameter, 10 mm long.

### Example 1

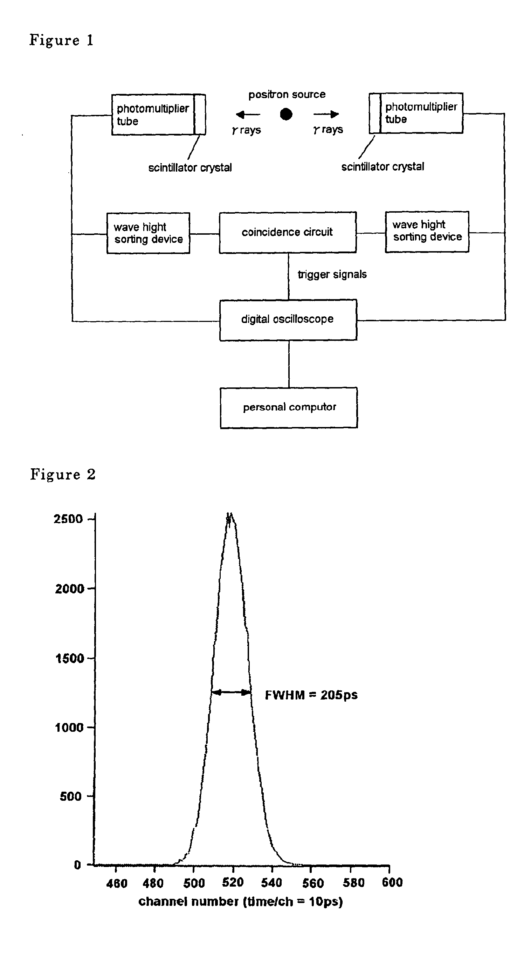

In the measuring system shown in Figure 1, a barium chloride (BaCl₂) crystal was used as the scintillator crystal in one of the radiation detection devices and barium fluoride was used in the other.

68Ge was used as the radiation source, and a timing difference measurement for a positron decay gamma ray (0.511 MeV) was conducted. The output from a photomultiplier tube was divided into two components, and one component was input directly into a high speed digital oscilloscope (LeCroy WavePro 7100) and the other was input into a wave height valve sorter and a coincidence circuit while a trigger to the oscilloscope was activated. The measurement data were sent to a personal computer and analyzed.

The results of a timing difference measurement for a positron decay gamma ray conducted using the present device were shown in Figure 2. The timing resolution capability (the half value at full width of the graph) was 205 ps

### Example 2.

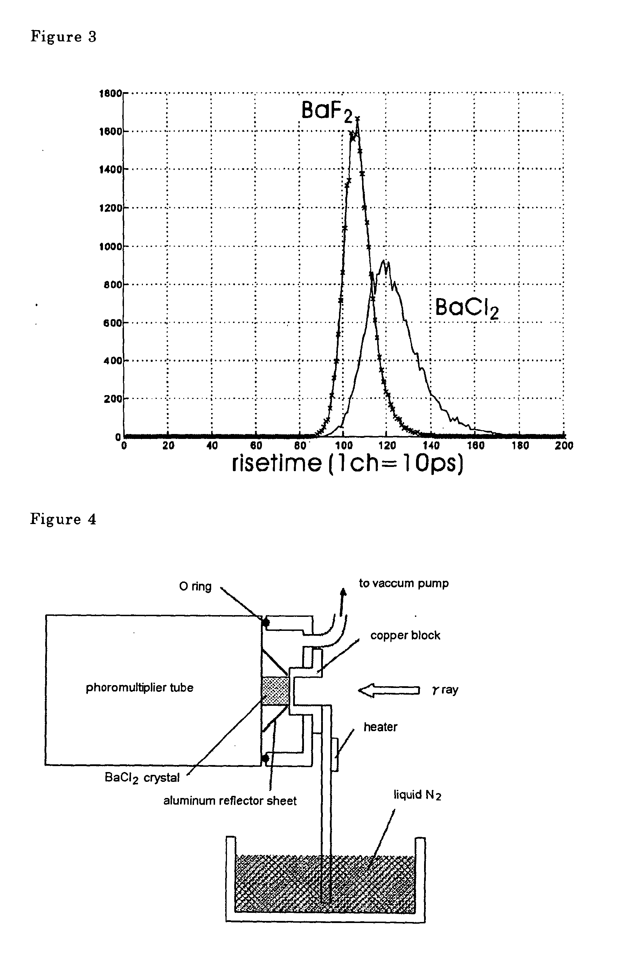

The rise times for the measurement wave shapes from the BaCl₂ and BaF₂ scintillators were compared using the measurement results from Example 1. The results are shown in Figure 3.

The rise time for BaF₂ was distributed between 900 and 1,300 ps, but the rising time for BaCl₂ was distributed between 1,000 ps and 1,600 ps, slightly slower. BaCl₂ was demonstrated to be a scintillator crystal with a timing response property approximating that of BaF₂.

### Example 3.

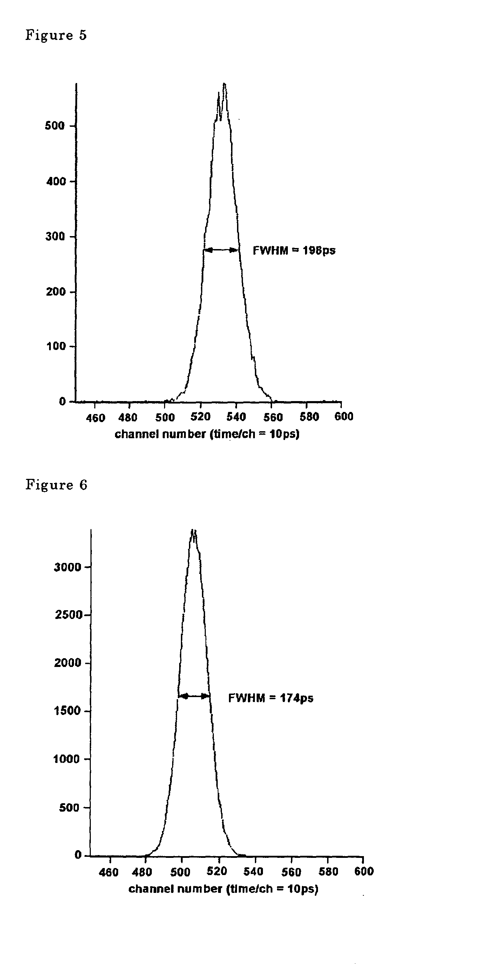

The BaCl₂ scintillator was cooled, and the same measurements described in Example 1 were conducted. Figure 4 shows the alignment of the cooled crystals. The BaCl₂ crystals were in the form of a 10 mm cube, the same as the one in Example 1. Silicone grease was used to directly apply the crystal to the tube surface of a photomultiplier tube. The opposing side surface was brought in contact with a copper block to cool the crystal. The silicone grease was also applied to the space between the crystal and the copper block. The copper block in the areas in contact with the crystal needs to be as thin as possible in order to minimize the decay of the gamma radiation entering the crystal. Here, the thickness was 0.5 mm. In addition, the area surrounding the crystal was under vacuum in order to prevent dew condensation on the crystal. The BaCl₂ crystal was cooled to -100°C for the measurements. The measurement results are shown in Figure 5. The graph indicated that the timing resolution capability improved to 198 ps.

### Comparative Example 1.

The same experiment was conducted using BaF₂ for both scintillators to compare the results with those obtained in Example 1 described above. Both BaF₂ scintillators were columns 30 mm in diameter and 10 mm thick. The results obtained were shown in Figure 6. The timing resolution capability shown on this graph was 174 ps.

When a combination of a BaCl₂ scintillator and a digital oscilloscope is used to conduct timing difference measurements as described above, a timing resolution capability comparable to that of BaF₂ with the fastest decay constant among the existing scintillators in use can be obtained. Therefore, such a combination can be utilized adequately for radiation measurements such as positron annihilation lifetimes and the like where excellent timing resolution capability is needed.

## Claims

1. A radiation detection device comprising a barium chloride (BaCl₂) crystal as a scintillator and a photomultiplier tube to receive the light from the scintillator wherein the wavelength of the light emitted from the scintillator is between 250 nm and 350 nm and the scintillator is located in a low humidity atmosphere.

2. The radiation detector as in claim 1 wherein the barium chloride crystal as a scintillator is cooled.

3. The radiation detection device as in claim 1 or 2 wherein the device is used to detect gamma rays.
